# FASCICULE DE BREVET EUROPEEN

(11) **EP 2 851 976 B1**
(45) Date de publication et mention de la délivrance du brevet: **07.09.2016**
(21) Numéro de dépôt: 14184716.0
(22) Date de dépôt: 15.09.2014
(51) Int. Cl.: H01M 2/20, H01M 10/613, H01M 10/647, H01M 10/6551, H01M 10/6553, H01M 10/6561, H01M 10/625, H01M 2/02

(54) **Système de refroidissement de batterie d'accumulateurs**
Kühlsystem für eine Batterie
Cooling system for a battery

(30) Priorité: 24.09.2013 FR 1359140
(43) Date de publication de la demande: 25.03.2015
(73) Titulaire: VALEO SYSTEMES THERMIQUES, 78320 Le Mesnil Saint-Denis (FR)
(72) Inventeur: Chauvin, Karen, 78230 Le Pecq (FR)
(74) Mandataire: Metz, Gaëlle

(56) Documents cités:
- EP-A1- 2 405 527
- WO-A1-2013/000889
- DE-A1-102009 016 866
- JP-A- 2006 066 083

## Description

L'invention concerne les batteries d'accumulateurs électriques telles que les batteries équipant les véhicules automobiles.

### ARRIERE PLAN DE L'INVENTION

La batterie d'un véhicule subit des cycles de charge et de décharge électriques qui tendent à faire fluctuer sa température de fonctionnement en raison de la circulation de courant dans les éléments composant cette batterie, encore appelés cellules.

Ainsi, une charge ou une décharge électrique de la batterie tend à réchauffer les cellules de celle-ci d'une façon d'autant plus importante que l'intensité de charge ou de décharge est élevée et qu'elle dure longtemps.

D'une manière générale, on souhaite éviter que la température des cellules ne fluctue d'une manière trop importante en raison du fait qu'une cellule de batterie a une plage de températures de fonctionnement optimal prédéterminée au delà de laquelle le rendement chute.

En outre, l'échauffement de la cellule au cours des phases de charge et de décharge induit des contraintes supplémentaires sur les matériaux utilisés pour fabriquer la cellule, qu'il convient de prendre en considération afin de permettre à la cellule de supporter des températures élevées sans dégradation.

Le document JP 2006 066083 A divulgue une batterie comprenant des organes de connexion où le corps de l'organe de connexion forme un dispositif de refroidissement.

### OBJET DE L'INVENTION

L'objet de l'invention est de proposer une solution pour faciliter le refroidissement d'une batterie d'accumulateurs de manière à accroître sa durée de vie et à réduire son coût de fabrication.

### RESUME DE L'INVENTION

A cet effet, l'invention a pour objet une batterie d'accumulateurs électriques, comprenant au moins deux cellules ayant chacune deux terminaisons de polarités opposées, ces cellules étant électriquement raccordées les unes aux autres par des organes de connexion reliant chacun les terminaisons de deux cellules distinctes, où les organes de connexion comprennent des dispositifs de refroidissement à air.

Dans une batterie selon l'invention, chaque organe de connexion comprend une pince ayant au moins deux branches comprenant des moyens de rappel élastiques tendant continuellement à rapprocher ces deux branches l'une de l'autre pour enserrer au moins deux terminaisons de deux cellules et chaque organe de connexion comprend un corps comprenant au moins deux branches formant une pince du type susdit, et dans laquelle ledit corps forme le dispositif de refroidissement.

De cette manière, la mise en place des organes de connexion sur les terminaisons des cellules est rapide et aisée et l'intégration d'un dispositif de refroidissement à l'organe de connexion permet avantageusement d'optimiser la structure dudit organe de connexion.

Ces dispositifs de refroidissement à air sont préférentiellement des radiateurs.

De manière avantageuse, le refroidissement des cellules de la batterie d'accumulateurs électriques selon l'invention est significativement amélioré, sans qu'il soit nécessaire de modifier ou d'adapter ces cellules.

L'invention concerne également une batterie ainsi définie, dans laquelle chaque cellule est une cellule de type « Pouch ». Dans la technologie des cellules souples, communément appelée « Pouch-Cells », chaque cellule comprend une plaque métallique intégrant une électrode positive, une électrode négative et un séparateur. Une telle cellule résulte de l'assemblage par juxtaposition d'un ensemble de composants se présentant sous la forme de feuilles souples réunies dans une enveloppe.

L'invention concerne également une batterie ainsi définie, comprenant des organes de connexion dont les dispositifs de refroidissement sont des radiateurs à ailettes.

L'invention concerne également une batterie ainsi définie, comprenant des organes de connexion dont les dispositifs de refroidissement sont des radiateurs à picots.

Au moins l'une des caractéristiques des dispositifs de refroidissement telles que le type, le nombre, l'emplacement, l'orientation peut différer selon la position dans la batterie des cellules sur lesquelles la ou les organes de connexion comprenant les dispositifs de refroidissement est (sont) disposée(s).

Préférentiellement, la batterie selon l'invention comprend un capot, la batterie étant caractérisée en ce que le capot comprend au moins une entrée d'air et au moins une sortie d'air afin de former un flux de circulation d'air. L'entrée d'air, la sortie d'air et lesdits dispositifs de refroidissement sont disposés de manière à ce que ledit flux d'air soit dirigé vers les dispositifs de refroidissement.

### BREVE DESCRIPTION DES FIGURES

La figure 1 est une vue en perspective d'une cellule de type « Pouch », connue qui est utilisable pour mettre en oeuvre l'invention ;
La figure 2 est une vue de dessus d'une batterie selon l'invention comprenant des cellules interconnectées par des organes de connexion intégrant chacun un radiateur de refroidissement ;
La figure 3 est une vue latérale de la batterie de la figure 2 ;
La figure 4 est une vue de face de la batterie de la figure 2 ;
La figure 5 est une vue de dessus d'une batterie comprenant des organes de connexion selon l'invention refroidis par flux d'air.
La figure 6 est une représentation schématique d'un premier mode de réalisation d'organe de connexion selon l'invention ;
La figure 7 est une représentation schématique d'un second mode de réalisation d'organe de connexion selon l'invention.

### DESCRIPTION DETAILLEE DE L'INVENTION

La batterie d'accumulateurs électriques selon l'invention permet d'utiliser les terminaisons électriques des cellules de la batterie en tant qu'interfaces thermiques qui permettent d'assurer un refroidissement optimal de ces cellules.

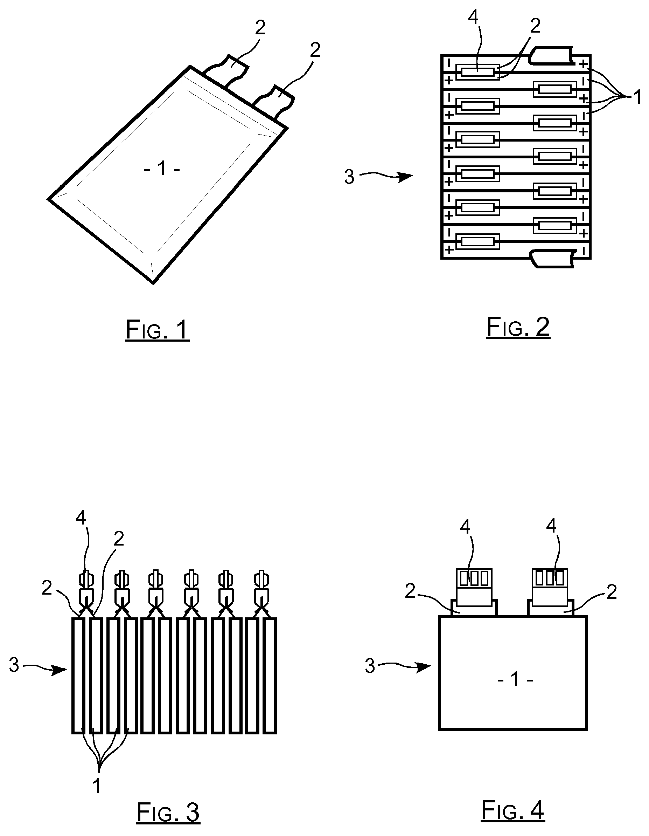

L'invention s'applique notamment aux batteries comprenant des cellules de type « Pouch ». Une cellule 1 de ce type, telle que représentée sur la figure 1, résulte de l'assemblage par juxtaposition d'un ensemble de composants se présentant sous la forme de feuilles souples réunies dans une enveloppe.

Tel que cela est représenté sur la figure 1, une cellule 1 du type susdit est une cellule souple 1 parallélépipédique, comprenant deux terminaisons électriques de polarités opposées qui se présentent sous forme de languettes souples 2 qui s'étendent sensiblement parallèlement l'une à l'autre, ces languettes 2 dépassant d'un même bord du contour parallélépipédique de la cellule « Pouch » 1.

Tel que cela est représenté sur la figure 2, la batterie 3 selon l'invention comprend une série de cellules 1 empilées d'une telle façon que l'ensemble de ces cellules empilées 1 présente sensiblement une forme parallélépipédique.

De plus, les cellules 1 sont empilées de manière à ce que les polarités des terminaisons 2 disposées d'un même côté de la batterie 3 soient alternées. Ainsi, les cellules 1 de la batterie 3 sont accolées tête bêche, chaque paire de languettes contigües 2 appartenant à deux cellules distinctes 1 ayant nécessairement des polarités opposées.

Dans l'exemple représenté sur la figure 2, la terminaison négative de la première cellule 1 est électriquement connectée, grâce à un organe de connexion 4, à la terminaison positive 2 de la seconde cellule 1. De même, la terminaison négative 2 de la troisième cellule 1 est électriquement connectée à la terminaison positive 2 de la quatrième cellule 1 par un autre organe de connexion 4.

Complémentairement, la terminaison négative 2 de la seconde cellule 1 est électriquement connectée à la terminaison positive 2 de la troisième cellule 1, par un organe de connexion 4. De la même manière, la terminaison négative 2 de la quatrième cellule 1 est électriquement connectée à la terminaison positive 2 de la cinquième cellule 1 par un organe de connexion 4.

Ainsi, les cellules 1 composant la batterie 3 représentée sur la figure 2 sont connectées les unes aux autres en série, de sorte que cette batterie 3 peut alimenter un circuit électrique en étant connectée à celui-ci par l'intermédiaire de la terminaison positive libre 2 de sa première cellule 1 et de la terminaison négative libre 2 de sa dernière cellule 1.

Les organes de connexion 4 de la batterie 3 représentée sur la figure 2 sont disposés de telle manière que deux organes de connexions 4 connectant chacun l'une des terminaisons 2 d'une même cellule 1 ne soient pas alignés.

Selon l'invention, chaque organe de connexion 4 interconnecte les terminaisons 2 de deux cellules 1, mais il comprend également un dispositif de refroidissement tel qu'un radiateur de manière à former également un élément de refroidissement de ces cellules 1.

Dans l'exemple représenté sur les figures, c'est-à-dire dans le cas de cellules de type « Pouch » dont les terminaisons 2 sont nécessairement des languettes souples, chaque organe de connexion 4 est une pince agencée pour enserrer deux languettes ou terminaisons 2 l'une contre l'autre.

Les organes de connexion 4 permettent donc de mettre ces languettes 2 en contact électrique et d'établir une liaison thermique appropriée pour assurer, entre l'organe de connexion 4 et les languettes 2, un transfert de chaleur permettant de refroidir les cellules 1.

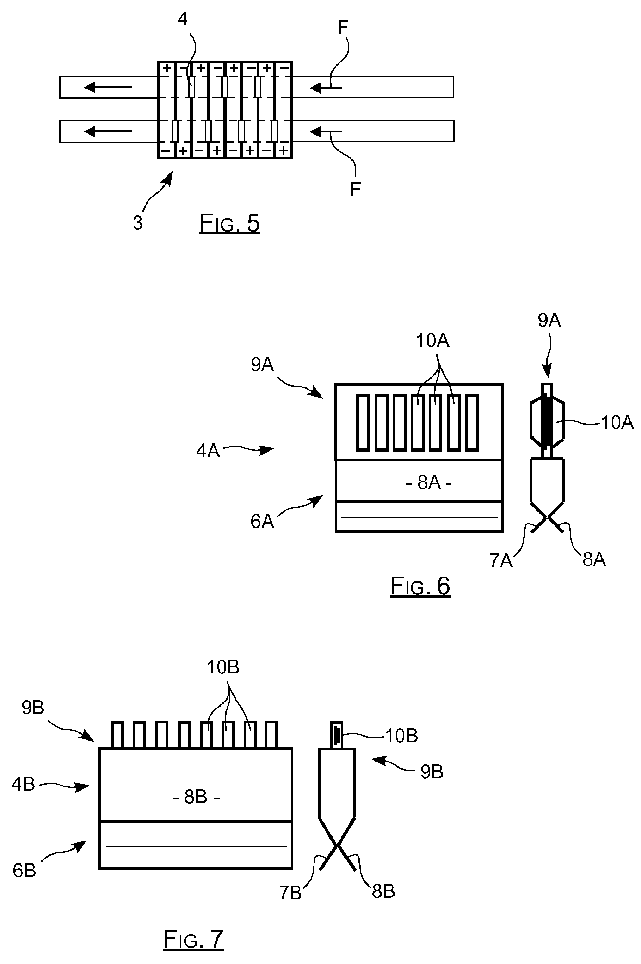

L'organe de connexion 4A représenté sur la figure 6 comprend ainsi :
- une pince 6A résultant du pliage d'un élément de tôle élastique afin de former deux bras 7A et 8A continuellement rappelés l'un vers l'autre par l'élasticité de la tôle qui les forme ; et
- un corps principal 9A formant un dispositif de refroidissement consistant en un radiateur à air, qui est en l'espèce un radiateur du type à ailettes.

En fonctionnement, tel que cela est représenté sur la figure 5, un flux d'air F dirigé vers la batterie 3 ventile ses organes de connexion 4, pour refroidir les radiateurs de ces organes de connexion 4. Chaque radiateur refroidit à son tour la pince qui le porte, puis les deux cellules 1 auxquelles cet organe 4 est associé par l'intermédiaire des terminaisons électriques 2 enserrées par la pince.

Dans l'exemple de la figure 6, le radiateur 9A de l'organe de connexion 4A est du type à ailettes 10A, mais il peut aussi bien s'agir d'un radiateur à picots, ou encore d'un radiateur ayant des ailettes de formes différentes.

Dans l'exemple de la figure 7, on a ainsi représenté un autre organe de connexion 4B selon l'invention, qui comprend une pince 6B en tôle pliée formant deux bras 7B et 8B, et qui est prolongée par un radiateur à air 9B dont les moyens de refroidissement sont non pas des ailettes mais des picots 10B.

Dans les exemples des figures, l'invention est mise en oeuvre avec une batterie comprenant des cellules de type « Pouch », qui sont intéressantes dans le cadre de l'invention du fait qu'elles présentent des terminaisons qui sont des languettes ou lamelles souples.

Mais l'invention peut aussi être mise en oeuvre sur des batteries qui comprennent d'autres types d'éléments, comprenant par exemple des terminaisons souples, voire des terminaisons rigides prolongées par des éléments souples.

## Revendications

1. Batterie d'accumulateurs électriques (3), comprenant au moins deux cellules (1) ayant chacune deux terminaisons (2) de polarités opposées, ces cellules (1) étant électriquement raccordées les unes aux autres par des organes de connexion (4 ; 4A ; 4B) reliant chacun les terminaisons (2) de deux cellules (1) distinctes, les organes de connexion (4 ; 4A ; 4B) comprennent des dispositifs de refroidissement à air (9A ; 9B), **caractérisé en ce que** chaque organe de connexion (4 ; 4A ; 4B) comprend une pince (6A ; 6B) ayant au moins deux branches (7A, 8A ; 7B, 8B) comprenant des moyens de rappel élastiques tendant continuellement à rapprocher ces deux branches (7A, 8A ; 7B, 8B) l'une de l'autre pour enserrer au moins deux terminaisons (2) de deux cellules (1) et **en ce que** chaque organe de connexion (4 ; 4A ; 4B) comprend un corps comprenant les au moins deux branches formant la pince (6A ; 6B), et dans laquelle le corps forme le dispositif de refroidissement (9A ; 9B).

2. Batterie selon la revendication 1, **caractérisée en ce que** les dispositifs de refroidissement à air (9A ; 9B) sont des radiateurs.

3. Batterie selon la revendication 1 ou 2, **caractérisée en ce que** chaque cellule (1) est une cellule de type Pouch.

4. Batterie selon l'une des revendications 1 à 3, **caractérisée en ce qu'**elle comprend des organes de connexion (4A) dont les dispositifs de refroidissement (9A) sont des radiateurs à ailettes (10A).

5. Batterie selon l'une des revendications 1 à 3, **caractérisée en ce qu'**elle comprend des organes de connexion (4B) dont les dispositifs de refroidissement (9B) sont des radiateurs à picots (10B).

6. Batterie selon l'une des revendications 1 à 5, **caractérisée en ce qu'**au moins l'une des caractéristiques suivantes des dispositifs de refroidissement (9A ; 9B) : le type, le nombre, l'emplacement, l'orientation, diffère selon la position dans la batterie des cellules (1) sur lesquelles la ou les organes de connexion (4 ; 4A ; 4B) comprenant les dispositifs de refroidissement (9A ; 9B) est (sont) disposée(s).

7. Batterie selon l'une quelconque des revendications 1 à 6 comprenant un capot, **caractérisée en ce que** le capot comprend au moins une entrée d'air et au moins une sortie d'air afin de former un flux de circulation d'air (F), l'entrée d'air, la sortie d'air et lesdits dispositifs de refroidissement (9A ; 9B) étant disposés de manière à ce que ledit flux d'air (F) soit dirigé vers les dispositifs de refroidissement (9A ; 9B).

## Patentansprüche

1. Elektrische Akkumulatorenbatterie (3), umfassend mindestens zwei Zellen (1), die jeweils zwei Anschlüsse (2) mit entgegengesetzten Polaritäten aufweisen, wobei diese Zellen (1) elektrisch durch Verbindungselemente (4; 4A; 4B) miteinander verbunden sind, die jeden der Anschlüsse (2) mit zwei bestimmten Zellen (1) verbinden, wobei die Verbindungselemente (4; 4A; 4B) Luftkühlvorrichtungen (9A; 9B) umfassen, **dadurch gekennzeichnet, dass** jedes Verbindungselement (4; 4A; 4B) eine Klemme (6A; 6B) umfasst, welche mindestens zwei Verzweigungen (7A, 8A; 7B, 8B) aufweist, die elastische Rückholmittel umfassen, welche kontinuierlich dazu tendieren, diese beiden Verzweigungen (7A, 8A; 7B, 8B) einander anzunähern, um mindestens zwei Anschlüsse (2) von zwei Zellen (1) festzuklemmen, und dass jedes Verbindungselement (4; 4A; 4B) einen Körper umfasst, der die mindestens zwei Verzweigungen umfasst, welche die Klemme (6A; 6B) bilden, und wobei der Körper die Kühlvorrichtung (9A; 9B) bildet.

2. Batterie nach Anspruch 1, **dadurch gekennzeichnet, dass** die Luftkühlvorrichtungen (9A; 9B) Radiatoren sind.

3. Batterie nach Anspruch 1 oder 2, **dadurch gekennzeichnet, dass** jede Zelle (1) eine Zelle vom Pouch-Typ ist.

4. Batterie nach einem der Ansprüche 1 bis 3, **dadurch gekennzeichnet, dass** sie Verbindungselemente (4A) umfasst, deren Kühlvorrichtungen (9A) Rippenradiatoren (10A) sind.

5. Batterie nach einem der Ansprüche 1 bis 3, **dadurch gekennzeichnet, dass** sie Verbindungselemente (4B) umfasst, deren Kühlvorrichtungen (9B) Luftleiterradiatoren (10B) sind.

6. Batterie nach einem der Ansprüche 1 bis 5, **dadurch gekennzeichnet, dass** sich mindestens eine der folgenden Charakteristiken der Kühlvorrichtungen (9A; 9B): Typ, Anzahl, Anordnung, Orientierung, gemäß der Position der Zellen (1) in der Batterie unterscheidet, auf denen das oder die Verbindungselement(e) (4; 4A; 4B) angeordnet ist (sind), welches oder welche die Kühlvorrichtungen (9A; 9B) umfasst oder umfassen.

7. Batterie nach einem der Ansprüche 1 bis 6, umfassend eine Haube, **dadurch gekennzeichnet, dass** die Haube mindestens einen Lufteinlass und mindestens einen Luftauslass umfasst, um einen zirkulierenden Luftstrom (F) zu bilden, wobei der Lufteinlass, der Luftauslass und die Kühlvorrichtungen (9A; 9B) derart angeordnet sind, dass der Luftstrom (F) zu den Kühlvorrichtungen (9A; 9B) hin gerichtet wird.

## Claims

1. Electric battery (3), comprising at least two cells (1) each having two terminations (2) of opposite polarities, these cells (1) being electrically connected to one another by connection members (4; 4A; 4B) each linking the terminations (2) of two distinct cells (1), in which the connection members (4; 4A; 4B) comprise air cooling devices (9A; 9B), **characterized in that** each connection member (4; 4A; 4B) comprises a clamp (6A; 6B) having at least two branches (7A, 8A; 7B, 8B) comprising elastic return means tending at all times to bring these two branches (7A, 8A; 7B, 8B) towards one another to grip at least two terminations (2) of two cells (1) and **in that** each connection member (4; 4A; 4B) comprises a body comprising the at least two branches forming the clamp (6A; 6B), and in which the body forms the cooling device (9A; 9B).

2. Battery according to Claim 1, **characterized in that** the air cooling devices (9A; 9B) are heat sinks.

3. Battery according to Claim 1 or 2, **characterized in that** each cell (1) is a cell of pouch type.

4. Battery according to one of Claims 1 to 3, **characterized in that** it comprises connection members (4A) whose cooling devices (9A) are fin-type heat sinks (10A).

5. Battery according to one of Claims 1 to 3, **characterized in that** it comprises connection members (4B) whose cooling devices (9B) are pin-type heat sinks (10B).

6. Battery according to one of Claims 1 to 5, **characterized in that** at least one of the following characteristics of the cooling devices (9A; 9B): the type, the number, the placement, the orientation, differs according to the position in the battery of the cells (1) on which the connection member or members (4; 4A; 4B) comprising the cooling devices (9A; 9B) is (are) arranged.

7. Battery according to any one of Claims 1 to 6, comprising a cap, **characterized in that** the cap comprises at least one air inlet and at least one air outlet in order to form an air circulation flow (F), the air inlet, the air outlet and said cooling devices (9A; 9B) being arranged in such a way that said air flow (F) is directed towards the cooling devices (9A; 9B).
